# EUROPÄISCHE PATENTSCHRIFT

(11) **EP 3 135 530 B1**
(45) Veröffentlichungstag und Bekanntmachung des Hinweises auf die Patenterteilung: **20.11.2019**
(21) Anmeldenummer: 16174086.5
(22) Anmeldetag: 13.06.2016
(51) Int. Cl.: B60M 1/34, A01K 5/02, B60L 5/40

(54) **SYSTEM MIT EINEM FUTTERWAGEN UND MIT EINEM STROMSCHIENENSYSTEM ZUR STROMVERSORGUNG DES FUTTERWAGENS**
SYSTEM WITH A FEEDING TROLLEY AND WITH A BUSBAR SYSTEM FOR SUPPLYING POWER TO THE FEEDING TROLLEY
SYSTEME COMPRENANT UN WAGON D'ALIMENTATION ET UN SYSTEME A RAIL DE CONDUCTEUR DESTINE A L'ALIMENTATION ELECTRIQUE DU WAGON D'ALIMENTATION

(30) Priorität: 24.08.2015 DE 202015104468 U
(43) Veröffentlichungstag der Anmeldung: 01.03.2017
(73) Patentinhaber: Trioliet B.V., 7575 BW Oldenzaal (NL)
(72) Erfinder: Liet, Cornelis Hendricus, 7581 PJ Losser (NL)
(74) Vertreter: Grünecker Patent- und Rechtsanwälte PartG mbB

(56) Entgegenhaltungen:
- EP-A2- 0 721 733
- EP-A2- 0 933 022
- WO-A1-2014/120000
- DE-A1- 2 542 682
- DE-A1- 3 438 612
- DE-A1- 19 713 459
- DE-U- 1 706 116
- DE-U1-202013 001 659
- JP-B1- S5 015 077
- JP-U- S59 132 428
- US-A- 446 417

## Beschreibung

Die Erfindung betrifft ein System mit einem Futterwagen und mit einem Stromschienensystem zur Stromversorgung des Futterwagens entlang eines Fahrwegs mit den Merkmalen des Anspruchs 1 bzw. 17. Ein derartiger Futterwagen kann durch eine Bedienperson fahr- und/oder steuerbar sein, ist jedoch im Allgemeinen unbemannt.

Ein derartiges System mit einem unbemannten Futterwagen und einem Stromschienensystem ist beispielsweise aus der DE 20 2013 001 659 U1 bekannt. Zur Fortbewegung des Futterwagens entlang eines vorbestimmten Bewegungsweges dient ein lenkbares, bodengestütztes Fahrwerk, das mit einem Elektroantrieb angetrieben wird. Um die elektrische Antriebsenergie in konstruktiv einfacher Weise bereitzustellen, wird eine dem Bewegungsweg folgende Stromschiene vorgeschlagen, von der der Futterwagen den Strom mittels eines Schleifkontakts abgreift. Die Stromschiene ist oberhalb einer Stallgasse befestigt, so dass der Futterwagen bei der Futterausgabe entlang der Stallgasse kontinuierlich und ohne Batterie mit Strom versorgt wird.

Allerdings ist das bekannte System auf das Abfahren eines einzigen vorbestimmten Bewegungsweges beschränkt, was nicht in jedem Fall vom Landwirt gewünscht ist.

Die JP S50-15077 B1 offenbart ein Schienensystem für eine Testschaltung.

Die DE 17 06 116 U offenbart eine Weiche für Hängebahnanlagen.

Die JP S59-132428 U offenbart ein Schienensystem für eine Schaltbox.

Die DE 25 42 682 A1 offenbart eine Fördervorrichtung mit einer geschlitzten Fahrbahn und wenigstens einem darauf passenden, durch den Schlitz der Fahrbahn geführten Fahrzeug.

Die US 446 417 A offenbart eine Leitungsführung für eine elektrische Bahn.

Die EP 0 933 022 A2 offenbart eine Fütterungsanlage für Ferkel.

Aufgabe der vorliegenden Erfindung ist es daher, ein System mit einem Futterwagen und mit einem Stromschienensystem zur Stromversorgung des Futterwagens bereitzustellen, dass eine möglichst flexible Wahl des Bewegungsweges entlang der Stallgassen erlaubt und das dennoch einen geringen Verschleiß des Stromabnehmerschlittens im Stromschienensystem gewährleistet.

Zur Lösung dieser Aufgabenstellung stellt die Erfindung ein System mit einem Futterwagen und mit einem Stromschienensystem zur Stromversorgung des Futterwagens mit den Merkmalen des Anspruchs 1 bereit.

Vorteilhafte Ausführungsformen der Erfindung sind in den Unteransprüchen genannt.

Das Stromschienensystem zeichnet sich durch eine Weiche aus, um den Stromabnehmerschlitten von einer ersten Stromschiene wahlweise zu einer von zwei weiterführenden Stromschienen zu leiten und dadurch, dass die Weiche zur Führung des Stromabnehmerschlittens zwei feststehende und auseinanderführende Außenführungen mit einem dazwischenliegenden Zungenelement umfasst, das derart verstellbar ist, dass es entweder an der einen oder der anderen Außenführung innen anliegt und dabei die jeweils gegenüberliegende Innenführung des weiterführenden Wegs bildet.

Dadurch, dass das Stromschienensystem eine Weiche umfasst, um den Stromabnehmerschlitten von einer ersten Stromschiene wahlweise zu einer von zwei weiterführenden Stromschienen zu leiten, ist es je nach Bedarf möglich, den Stromabnehmerschlitten zu verschiedenen Stromschienen und damit verschiedenen Zweigen des Fahrwegs zu führen. Dadurch kann der Futterwagen flexibel entlang verschiedener Bewegungswege fahren.

Dadurch, dass die Weiche zur Führung des Stromabnehmerschlittens zwei feststehende und auseinanderführende Außenführungen mit einem dazwischenliegenden Zungenelement umfasst, kann das Zungenelement entweder zur einen oder zur anderen Außenführung verstellt werden, so dass es daran anliegt. Dadurch dient das Zungenelement als Innenführung einerseits und die gegenüberliegende Außenführung andererseits dazu, den Stromabnehmerschlitten beidseitig zu der gewählten, weiterführenden Stromschiene zu leiten. Folglich wird bei der erfindungsgemäßen Weiche lediglich das Zungenelement verstellt und es entstehen besonders wenige Übergänge, an denen der Stromabnehmerschlitten beschädigt bzw. verschlissen werden kann. Darüber hinaus bietet die feststehende Ausführung der Außenführungen eine stabile, feststehende Grundkonstruktion zur Verbindung der Stromschienen. Dadurch führen die beim Schleppen des Stromabnehmerschlittens ausgeübten Zugkräfte nicht zu Abständen oder Stufen im Stromschienensystem. Folglich wird auch dadurch ein Verschleiß vermieden.

Würde demgegenüber ein Stromschienensegment als Ganzes für die Funktion einer Weiche hin und her geschoben werden, so ergäben sich durch die beim Schleppen auftreten Zugkräfte Stufen bzw. Abstände in der Führung, die sowohl die Führungsrollen als auch die Stromabnehmer beschädigen bzw. verschleißen können.

Folglich wird mit dem erfindungsgemäßen System ein flexibles Stromschienensystem bereitgestellt, das den Stromabnehmerschlitten dennoch vor Beschädigungen bzw. einem Verschleiß schützt.

Der Futterwagen kann durch eine Bedienperson fahr- und/oder steuerbar ausgebildet sein, ist jedoch vorzugsweise unbemannt. Der Futterwagen kann ein bodengestütztes und lenkbares Fahrwerk mit einem Elektroantrieb umfassen. Der Elektroantrieb kann einen Elektromotor und eine Getriebe umfassen. Die Stromversorgung kann für den Elektroantrieb und eine Steuerung vorgesehen sein. Des Weiteren kann der Futterwagen einen Futterbehälter mit einem Futterverteilersystem zum Verteilen von Futter im Stall umfassen. Ebenso oder zusätzlich kann der Futterwagen als Futtermischwagen ausgebildet sein, der insbesondere mit einer Mischkammer mit einem Mischwerkzeug ausgebildet ist. Der Futterbehälter kann die Mischkammer umfassen oder sein. Das Fahrwerk kann zur Übertragung der Antriebskraft auf den Boden Räder und/oder Raupen umfassen.

Das Stromschienensystem kann oberhalb des Futterwagens angeordnet sein, so dass der Stromabnehmerschlitten von vertikal unten darin eingreift. Beispielsweise kann das Stromschienensystem über Befestigungselemente an einer Decke und/oder Wänden im Stall befestigt sein. Vertikal kann hier die Richtung sein, die auf den Erdmittelpunkt gerichtet ist. Des Weiteren kann das Stromschienensystem mehrere, insbesondere gerade und/oder kurvensegmentartige Stromschienen umfassen, die entlang des Fahrwegs verlaufen. Der Fahrweg kann mehrere durch Stromschienen gebildete Zweige mit zwei, drei oder noch mehr Verzweigungen umfassen, entlang derer der Futterwagen im Betrieb fahren kann.

Das Stromschienensystem ist zusätzlich als Lenkschienensystem ausgebildet, wobei der vorbestimmte Bewegungsweg zum Lenken des Futterwagens wenigstens in Teilabschnitten über den Stromabnehmerschlitten mit abgegriffen wird.

Die Weiche kann vorzugsweise eine Y-Form aufweisen, an deren einen Ende die erste Stromschiene und an deren beiden anderen Enden die zwei weiteren Stromschienen angekoppelt sind. Die Weiche kann über eine Steuerung und/oder einen Aktuator umschaltbar sein, sodass wahlweise der Stromabnehmerschlitten von der ersten Stromschiene zu einer der beiden weiterführenden Stromschienen geleitet wird. Die beiden feststehenden und auseinanderführenden Außenführungen können band- oder scherenartig entlang der beiden wählbaren Bewegungswege des Stromabnehmerschlittens an der Außenseite ausgebildet sein. Das dazwischenliegende Zungenelement kann schwenkbar sein, vorzugsweise um eine Schwenkachse. Des Weiteren kann die Weiche zwei feststehende und auseinanderführende Innenführungen umfassen, die ab der Schwenkachse des Zungenelements vom Zungenelement weg und parallel zu den Außenführungen verlaufen. Das Zungenelement kann als schwenkbare Schottwand ausgebildet sein, die vorzugsweise mit den Führungsflächen korrespondierend zu den Außenführungen ausgebildet ist. Das Zungenelement kann aus einem flexiblen Material bestehen, beispielsweise einem flexiblen Kunststoff, wie Gummi oder dergleichen.

Der Stromabnehmerschlitten kann am Futterwagen über ein vorzugsweise bewegbares Gestänge angebracht sein. Beispielsweise kann das Gestänge vom Futterwagen vertikal nach oben hinausragen, wobei am oberen Ende des Gestänges der Stromabnehmerschlitten angebracht ist. Der Stromabnehmerschlitten kann mehrere Führungsrollen umfassen, die vorzugsweise teilweise zueinander parallel und teilweise zueinander senkrecht angeordnet sind. Anders ausgedrückt, können einige der Führungsrollen vertikal und einige der Führungsrollen horizontal angeordnet sein. Dadurch kann der Stromabnehmerschlitten in zwei zueinander senkrechten Richtungen im Stromschienensystem geführt werden.

Des Weiteren kann der Stromabnehmerschlitten mit zwei zueinander gegenüberliegenden und federvorgespannten Stromabnehmern zum Abgreifen des Stroms von entsprechenden Leiterbahnen der Stromschienen ausgebildet sein. Folglich kann der Strom auch bei einem schwankenden Abstand der Leiterbahnen zuverlässig abgegriffen werden. Dadurch, dass die Stromabnehmer gegenüberliegend angeordnet sind, kann auch eine schwankende Breite der Führungsbahn, sowohl in den Stromschienen als auch in der Weiche zuverlässig ausgeglichen werden. Die Stromabnehmer können als Gleitblöcke bzw. Schleifkontakte ausgebildet sein, die mit einer Feder aus dem Stromabnehmerschlitten heraus und gegen die Leiterbahnen der Stromschienen gedrückt werden. Vorzugsweise können die Stromabnehmer senkrecht zum Bewegungsweg des Stromabnehmerschlittens federvorgespannten sein. Die Stromabnehmer können Graphitelemente oder Kupferelemente umfassen, die als Block oder in Form von Bürsten, etc. ausgebildet sind. Des Weiteren können die Leiterbahnen der Stromschienen als Kupferbahnen ausgebildet sein, um einen besonders zuverlässigen Kontakt bei der Stromzuführung zu gewährleisten. Der Bewegungsweg des Stromabnehmerschlittens kann entlang des Stromschienensystems, vorzugsweise entlang der Stromschienen und/oder entlang des gewählten Weges in der Weiche verlaufen.

Die Abstände zwischen den Außenführungen und dem Zungenelement können derart gewählt sein, dass im Betrieb beim gesamten Durchlaufen der Weiche immer ein Stromabnehmer in Kontakt mit einer der Außenführungen oder dem daran anliegenden Zungenelement und der andere, gegenüberliegende Stromabnehmer gleichzeitig in Kontakt mit der anderen Außenführung stehen. Dadurch ist gewährleistet, dass der Stromabnehmer immer einen beidseitigen Kontakt zur Stromschiene bzw. zur Weiche hat und damit besonders zuverlässig und genau geführt wird. Toleranzen der Stromschiene bzw. Weiche sowie Änderungen in der Breite der Führung werden dadurch besonders einfach ausgeglichen.

Die Weiche kann derart ausgebildet sein, dass die weiterführenden Wege, insbesondere die weiterführenden Stromschienen, einen Winkel in einem Bereich von 5 - 25 Grad einschließen. Vorzugsweise beträgt der Winkel 10 - 15 Grad. Dadurch ist gewährleistet, dass der Stromabnehmerschlitten nicht innerhalb der Weiche hängenbleibt und die Führungsrollen nicht zu stark verschleißen. Vorzugsweise kann eine der weiterführenden Stromschienen mit der ersten Stromschiene fluchten und die andere weiterführende Stromschiene demgegenüber im zuvor genannten Winkel abgewinkelt sein. Dadurch kann der Futterwagen wahlweise geradeaus fahren oder abzweigen.

Die Weiche ist ohne Leiterbahnen ausgebildet und der Futterwagen umfasst zur unterbrechungsfreien Stromversorgung wenigstens zwei der Stromabnehmerschlitten. Dadurch kann die Weiche konstruktiv besonders einfach aufgebaut werden, da die Leiterbahnen nicht in das Zungenelement integriert werden müssen. Des Weiteren wird die Ebenheit der Außenführungen bzw. des Zungenelements nicht durch Leiterbahnen gestört, so dass der Verschleiß des Stromabnehmerschlittens besonders gering ist. Ferner ist dadurch eine besonders zuverlässige Stromversorgung des Futterwagens gewährleistet, da entlang der Stromschienen eine doppelte Versorgung durch die beiden Stromabnehmerschlitten erfolgt und beim Durchfahren der Weiche immer einer der Stromabnehmerschlitten mit den Leiterbahnen des Stromschienensystems in Kontakt steht. Die beiden Stromabnehmerschlitten weisen einen Abstand zueinander auf, der größer ist, als die Weiche entlang ihrer Führungswege für die Stromabnehmerschlitten. Dadurch befindet sich immer ein Stromabnehmerschlitten außerhalb der Weiche und kann den Strom sicher abgreifen.

Die Weiche kann einen Aktuator zum Verstellen des Zungenelements umfassen. Dadurch kann die Weiche mittels einer Steuerung besonders einfach ohne manuellen Eingriff umgeschaltet werden. Des Weiteren kann das Zungenelement mit einer Feder derart vorgespannt sein, dass es im Betrieb beim Rückwärtsdurchfahren der Weiche durch den Stromabnehmerschlitten von einer der Ausführungen zur anderen Außenführung hindrückbar ist oder umgekehrt. Dadurch kann der Stromabnehmerschlitten die Weiche auch umgekehrt durchfahren, ohne dass er hängen bleibt. Folglich ist auch bei einer Fehlstellung des Zungenelements eine sichere Arbeitsweise des Systems gewährleistet. Das Zungenelement kann über die Feder mit dem Aktuator verbunden sein.

Der Aktuator kann beispielsweise ein Linearaktuator sein, der über einen Hebel mit dem Zungenelement verbunden ist. Dadurch kann die Bewegung des Linearaktuators über den Hebel in die Verstell- oder Schwenkbewegung des Zungenelements übersetzt werden. Der Hebel kann über die Feder mit dem Linearaktuator verbunden sein.

Wenigstens ein Positionssensor kann dazu ausgebildet sein, die Position des Zungenelements sowohl an der einen Außenführung als auch an der anderen Außenführung zu erfassen. Dadurch kann sichergestellt werden, dass sich das Zungenelement nicht an einer Zwischenposition befindet, wodurch sich der Stromabnehmerschlitten beim Durchfahren der Weiche festsetzen könnte. Vorzugsweise können zwei Positionssensoren an der Weiche angeordnet sein, um die jeweilige anliegende Position des Zungenelements zu erfassen. Beispielsweise kann der Positionssensor als Magnetsensor, vorzugsweise als Hall- oder Induktionssensor ausgebildet sein, um die Position eines mit der Bewegung des Zungenelements korrespondierenden Magneten zu erfassen. Dazu kann der Magnet an dem Zungenelement oder an dem Hebel oder an dem Aktuator angeordnet sein.

Ferner können entlang der Stromschiene Magnete angeordnet sein und am Stromabnehmerschlitten ein Magnetsensor, um die Position des Stromabnehmerschlittens entlang des Stromstromschienensystems zu erfassen. Dadurch kann der Futterwagen entlang des Fahrwegs besonders einfach geortet werden. Beispielsweise können die Magnete jeweils im Magnetsensor einen Stromimpuls auslösen, die mittels einer Zähleinrichtung erfasst werden, beispielsweise mit einer Steuerung. Der Magnetsensor des Stromabnehmerschlittens kann als Hall-Sensor oder als Induktionssensor ausgebildet sein.

Das Stromschienensystem kann Stromschienen mit einem U-Profil umfassen, die den Stromabnehmerschlitten teilweise umschließen. Anders ausgedrückt können die Stromschienen mit einem im Wesentlichen rechteckigen Querschnitt ausgebildet sein, das an einer vorzugsweise vertikal unteren Seite einen Schlitz aufweist, um eine mechanische und elektrische Verbindung zwischen dem innerhalb geführten Stromabnehmerschlitten und dem Futterwagen zu schaffen. Dadurch kann der Stromabnehmerschlitten in zwei Richtungen senkrecht zum Fahrweg besonders gut geführt werden. Des Weiteren können an den Stromschienen innenliegende Stege für die Führungsrollen des Stromabnehmerschlittens ausgebildet sein, wobei vorzugsweise zwischen den Stegen die Leiterbahnen zur Stromführung verlaufen. Dadurch kann der Stromabnehmerschlitten in den Stromschienen sowohl geführt als auch mit Strom versorgt werden.

Die Stromschienen können mit innenliegenden Leiterbahnen ausgebildet sein, insbesondere wobei mehrere Leiterbahnen zur Stromversorgung und eine Leiterbahn als Erdung vorgesehen sind. Denkbar ist, dass drei Leiterbahnen als Phasenleitungen für Drehstrom und/oder eine Leiterbahn als Erdungs-Leiter vorgesehen sind. Vorzugsweise können weitere Leiterbahnen als Null-Leiter und/oder Gleichstromsystem, beispielsweise mit 24V, vorgesehen sein. Dadurch kann der Futterwagen mit Drehstrom versorgt werden, wodurch eine besonders verschleißarme und effiziente Energieumsetzung im Elektroantrieb des Futterwagens möglich ist. Des Weiteren kann über die Erdung eine effektive Absicherung gegen einen elektrischen Schlag gewährleistet werden. Ebenso ist denkbar, dass die Leiterbahnen eine Plus- und eine Minusleitung für Gleichstrom oder eine Phasenleitung und einen Null-Leiter für Wechselstrom umfassen. Die Leiterbahnen können aus Kupfer bestehen, um eine besonders widerstandsarme Stromführung zu gewährleisten.

Der Futterwagen und das Stromschienensystem können jeweils mit einer Funkdatenschnittstelle ausgebildet sein, insbesondere mit WLAN oder Bluetooth, um Steuerbefehle für die Wahl des weiterführenden Wegs auszutauschen. Dazu können der Futterwagen und das Stromschienensystem, insbesondere die Weiche jeweils eine Steuerung umfassen, die mit der Funkdatenschnittstelle ausgebildet ist.

Der Futterwagen kann dazu ausgebildet sein, Steuerbefehle an das Stromschienensystem zur Umschaltung der Weiche abzugeben. Dadurch kann das Stromschienensystem bzw. dessen Weichen vom Futterwagen autonom gesteuert werden.

Darüber hinaus stellt die Erfindung ein System mit einem Futterwagen und mit einem Stromschienensystem zur Stromversorgung des Futterwagens entlang eines Fahrwegs mit den Merkmalen des Anspruchs 15 bereit.

Vorteilhafte Ausführungsformen der Erfindung sind in den Unteransprüchen genannt.

Das Stromschienensystem zeichnet sich durch eine Weiche aus, um den Stromabnehmerschlitten von einer ersten Stromschiene wahlweise zu einer von drei weiterführenden Stromschienen zu leiten, wobei die Weiche zur Führung des Stromabnehmerschlittens zwei feststehende und auseinanderführende Außenführungen mit zwei dazwischenliegenden Zungenelement umfasst, die derart verstellbar sind, dass entweder die Zungenelemente an unterschiedlichen Außenführungen innen anliegen und dabei zueinander gegenüberliegende Innenführungen des mittleren weiterführenden Wegs bilden, oder dass beide Zungenelemente gemeinsam entweder an der einen oder der anderen Außenführung innen anliegen und dabei die jeweils gegenüberliegende Innenführung des äußeren weiterführenden Wegs bilden.

Dadurch, dass das Stromschienensystem eine Weiche umfasst, um den Stromabnehmerschlitten von einer ersten Stromschiene wahlweise zu einer von drei weiterführenden Stromschienen zu leiten, ist es je nach Bedarf möglich, den Stromabnehmerschlitten von einer Stromschiene zu drei alternativen Zweigen des Fahrwegs zu führen. Dadurch kann der Futterwagen flexibel entlang verschiedener Bewegungswege fahren.

Dadurch, dass die Weiche zur Führung des Stromabnehmerschlittens zwei feststehende und auseinanderführende Außenführungen mit zwei dazwischenliegenden Zungenelement umfasst, kann der Stromabnehmerschlitten einerseits zwischen den beiden Zungenelementen als gegenüberliegende Innenführungen geführt werden und gelangt so zum mittleren weiterführenden Weg. Andererseits können auch beide Zungenelemente gemeinsam zu der einen oder der anderen Außenführung gestellt werden, so dass dadurch eine Innenführung für einen der beiden äußeren weiterführenden Wege gebildet wird. In dieser Stellung ist eines der beiden Zungenelemente zwischen dem anderen Zungenelement und der Außenführung angeordnet. Folglich wird der Stromabnehmerschlitten durch eines oder beide Zungenelemente als Innenführung und die gegenüberliege Außenführung geführt.

Es werden also bei der erfindungsgemäßen Weiche lediglich die Zungenelemente verstellt und es entstehen besonders wenige Übergänge, an denen der Stromabnehmerschlitten beschädigt bzw. verschlissen werden kann. Darüber hinaus bietet die feststehende Ausführung der Außenführungen eine stabile, feststehende Grundkonstruktion zur Verbindung der Stromschienen. Dadurch führen die beim Schleppen des Stromabnehmerschlittens ausgeübten Zugkräfte nicht zu Abständen oder Stufen im Stromschienensystem. Folglich wird auch dadurch ein Verschleiß vermieden.

Es versteht sich, dass das System nach Anspruch 15 sinngemäß auch die weiter oben beschriebenen Merkmale einzeln oder in beliebiger Kombination aufweisen kann. Insbesondere kann das System nach Anspruch 15 die Merkmale nach einem der Ansprüche 2 - 14 umfassen.

Dass "beide Zungenelemente gemeinsam entweder an der einen oder der anderen Außenführung innen anliegen" kann hier bedeuten, dass in dieser Stellung beide Zungenelemente zu der einen oder der anderen Außenführung hin verstellt oder geschenkt sind. Dabei kann ein Zungenelement an der Außenführung direkt innen anliegen und das andere Zungenelement direkt an dem einen Zungenelement. Denkbar ist auch, dass in dieser Stellung ein Zungenelement an der Außenführung direkt innen anliegt und das andere dazwischen angeordnet ist. Anders ausgedrückt kann eines der Zungenelemente im Wesentlichen die Innenführung und eine der feststehenden Außenführungen die Außenführung des Stromabnehmerschlittens übernehmen.

Die Weiche kann einen oder zwei Aktuatoren zum Verstellen der beiden Zungenelemente umfassen. Dadurch kann die Weiche mittels einer Steuerung besonders einfach ohne manuellen Eingriff umgeschaltet werden. Beispielsweise kann ein Aktuator über ein System aus seriell gekoppelten Federn mit beiden Zungenelementen verbunden sein. Ebenso ist denkbar, dass die Zungenelemente jeweils mit einem separaten Aktuator verstellbar sind. Vorzugsweise können die Zungenelemente mit Federn derart vorgespannt sein, dass sie im Betrieb beim Rückwärtsdurchfahren der Weiche durch den Stromabnehmerschlitten von einer der Ausführungen zur anderen Außenführung hindrückbar sind oder umgekehrt. Dadurch kann der Stromabnehmerschlitten die Weiche auch umgekehrt durchfahren, ohne dass er hängen bleibt. Folglich ist auch bei einer Fehlstellung der Zungenelemente eine sichere Arbeitsweise des Systems gewährleistet. Die Zungenelemente können jeweils über eine Feder mit dem jeweiligen Aktuator verbunden sein.

Die Aktuatoren können beispielsweise Linearaktuatoren sein, die über Hebel mit den jeweiligen Zungenelementen verbunden sind. Dadurch kann die Bewegung des jeweiligen Linearaktuators über den Hebel in die Verstell- oder Schwenkbewegung des damit verbundenen Zungenelements übersetzt werden. Die Hebel können über Federn mit den Linearaktuatoren verbunden sein.

Die Abstände zwischen den Außenführungen und den Zungenelementen kann derart gewählt sein, dass im Betrieb beim gesamten Durchlaufen der Weiche immer zwei einander gegenüberliegende und federvorgespannte Stromabnehmer gleichzeitig jeweils in Kontakt mit einem oder beiden Zungenelemente und/oder einer der Außenführungen stehen.

Es versteht sich, dass in dem Stromschienensystem mehrere der zuvor beschriebenen Weichen und Stromschienen angeordnet sein können, um verschiedene Stränge aus Stromschienen miteinander zu verbinden und so das gesamte Stromschienensystem zu bilden. Das Stromschienensystem kann gerade und/oder kreisbogenförmige Stromschienen umfassen, die miteinander verbindbar sind. Einander entsprechende Leiterbahnen der Stromschienen können an den Verbindungen elektrisch miteinander in Kontakt stehen, so dass der Strom von einer Stromschiene zur nächsten weitergeleitet wird.

Weiter Merkmale und Vorteile der Erfindung werden nachfolgend anhand der in den Figuren dargestellten Ausführungsbeispiele näher erläutert. Dabei zeigt:
- Figur 1: ein Ausführungsbeispiel eines Systems aus einem Futterwagen und einem Stromschienensystem zur Stromversorgung des Futterwagens in einer perspektivischen Ansicht von schräg oben;
- Figuren 2A - 2B: einen Stromabnehmerschlitten und eine Stromschiene des Ausführungsbeispiels der Figur 1 in einer Seitenansicht bzw. in einer perspektivischen Schnittansicht;
- Figuren 3A - 3B: eine Weiche des Stromschienensystems des Ausführungsbeispiels der Figur 1 mit zwei weiterführenden Wegen in den zwei unterschiedlichen Stellungen des Zungenelements in einer Ansicht von vertikal unten;
- Figur 4: die Weiche aus den Figuren 3A - 3B aus einer perspektivischen Ansicht von schräg oben; und
- Figuren 5A - 5C: eine weiteres Ausführungsbeispiel einer Weiche des Stromschienensystems nach der Figur 1 mit drei weiterführenden Wegen in den unterschiedlichen Stellungen der Zungenelemente in einer Ansicht von vertikal unten.

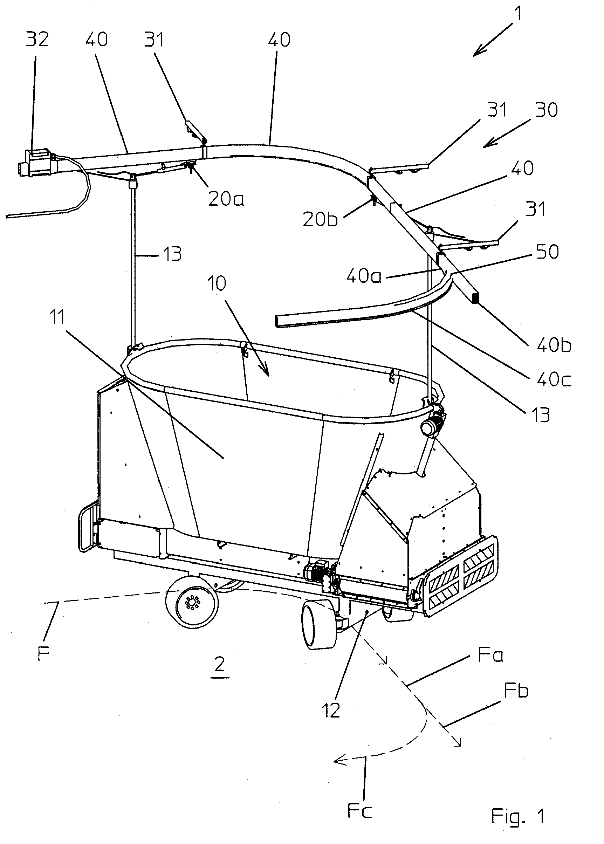

In der Figur 1 ist ein Ausführungsbeispiel des Systems 1 mit dem Futterwagen 10 und dem Stromschienensystem 30 zur Stromversorgung des Futterwagens 10 in einer perspektivischen Ansicht von schräg oben dargestellt. Zu sehen ist ein Teil des Stallbodens 2, auf dem der Futterwagen 10 entlang des Fahrwegs F fährt. Zur Fortbewegung ist der Futterwagen 10 mit dem bodengestützten und mit einem Elektromotor angetriebenen Fahrwerk 12 ausgebildet, das die Antriebskraft beispielsweise mit Rädern auf den Stallboden 2 überträgt. Die Lenkung erfolgt über eine entsprechend gesteuerte Lenkbewegung von einem Teil der Räder oder allen Rädern. Denkbar ist jedoch auch jedes beliebige andere bodengestützte und elektrisch angetriebene Fahrwerk, beispielsweise eine Raupe. Des Weiteren befindet sich im Behälter 11 des Futterwagens 10 ein Futtervorrat, der bei der Fahrt über ein hier nicht dargestelltes Verteilsystem im Stall verteilt wird.

Zur Versorgung des Futterwagens 10 mit Strom dient das Stromschienensystem 30, von dem die elektrische Energie mit den Stromabnehmerschlitten 20a und 20b abgegriffen und zum elektrischen Antrieb bzw. auch zur Steuerung des Futterwagens 10 übertragen wird. Die Stromabnehmerschlitten 20a, 20b sind mit dem Gestänge 13 über dem Futterwagen 10 so angeordnet, dass sie durch die Bewegung des Futterwagens 10 entlang des Stromschienensystems 30 gezogen werden. Denkbar ist auch, dass die Stromabnehmer 20a, 20b Teil eines Lenksystems sind, um den durch das Stromschienensystem 30 wenigstens teilweise vorgegebenen Bewegungsweg abzugreifen und an eine Steuerung des Futterwagens 10 zu übertragen.

Das Stromschienensystem 30 ist im Ausführungsbeispiel vertikal oberhalb des Futterwagens 10 angeordnet und mit den Befestigungselementen 31 an der Wand oder an der Decke des Stalls befestigt. Denkbar ist jedoch auch jede andere geeignete Anordnung. Das Stromschienensystem 30 umfasst lineare und kreissegmentförmige Stromschienen 40, die entlang des Fahrwegs F angeordnet sind und in die an der Einspeisestelle 32 Strom aus einer üblichen Stromquelle eingespeist wird.

Des Weiteren ist die Weiche 50 zu sehen, über die eine erste Stromschiene 40a mit zwei weiterführenden Stromschienen 40b und 40c verbunden sind. In diesem Beispiel ist es durch die Weiche 50 möglich, dass die Stromabnehmer 20a, 20b entweder geradeaus zur Stromschiene 40b weitergeführt werden, so dass der Futterwagen 10 vom ersten Abschnitt Fₐ geradeaus in Richtung zum zweiten Abschnitt des Fahrwegs F_{b} weiterfahren kann. Andererseits kann die Weiche 50 auch so umgestellt werden, dass die Stromabnehmerschlitten 20a, 20b in Richtung der Stromschiene 40c geführt werden, damit der Futterwagen 10 vom ersten Abschnitt Fₐ zum dritten Abschnitt des Fahrwegs F_{c} abzweigen kann.

Dies kann je nach Bedarf durch eine Steuerung im Futterwagen 10 gesteuert werden. Dazu ist der Futterwagen 10 mit einer hier nicht dargestellten Funkdatenschnittstelle ausgestattet, über die er entsprechende Steuerbefehle an eine Steuerung der Weiche 50 überträgt.

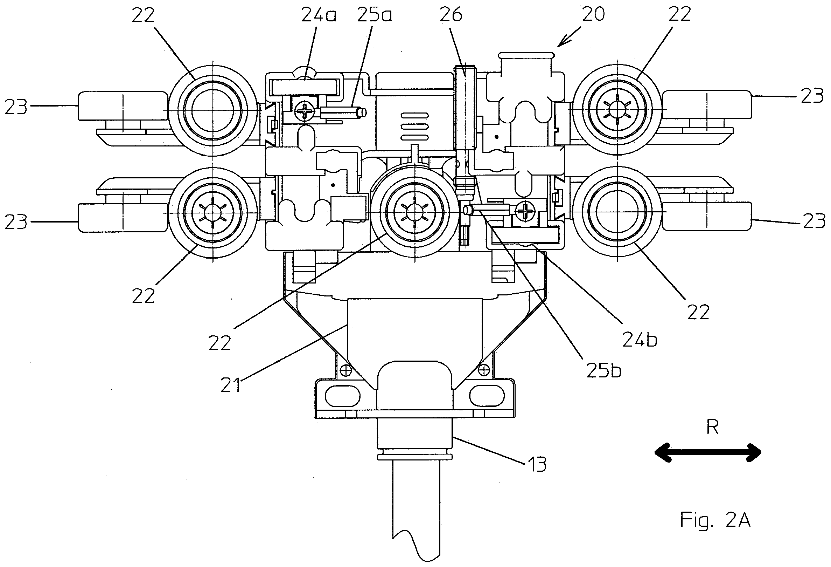

Der genaue Aufbau des Stromabnehmers 20 sowie der Stromschiene 40 wird nachfolgend anhand der Figuren 2A - 2B genauer erläutert. In der Figur 2A ist eine Seitenansicht des Stromabnehmerschlittens 20 gezeigt, wie er jeweils als Stromabnehmerschlitten 20a bzw. 20b in der Figur 1 zum Einsatz kommt.

Zu sehen sind mehrere vertikale Führungsrollen 22, die eine Führung des Stromabnehmerschlittens 20 quer zur Laufrichtung R vertikal nach oben und unten erlauben. Des Weiteren sind mehrere horizontale Führungsrollen 23 am Stromabnehmerschlitten 20 angeordnet, die entsprechend zur Führung in horizontaler Richtung dienen.

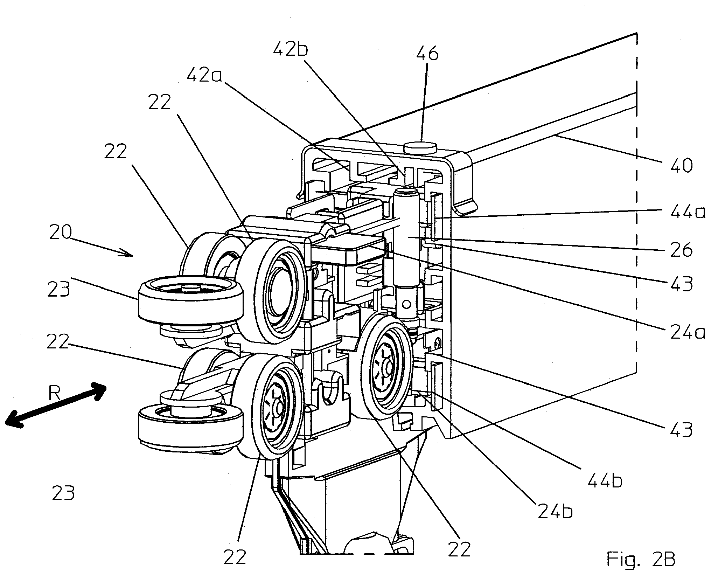

Darüber hinaus sind an dem Stromabnehmerschlitten 20 die Stromabnehmer 24a, 24b angeordnet, um zwei unterschiedliche Phasen des Stroms abzugreifend. Ferner sind zwei weitere Stromabnehmer auf der hier nicht dargestellten Rückseite gegenüberliegend angeordnet, um eine weitere Phase sowie die Erdung abzugreifen. Um einen möglichst unterbrechungsfreien Kontakt der Stromabnehmer 24 zu gewährleisten, sind diese über Federn so gelagert, dass sie quer zur Laufrichtung R des Stromabnehmerschlittens vorgespannt sind. Der so vom Stromschienensystem 30 abgegriffene Strom wird von den Stromabnehmern 24 über die Leitungen 25 an den Futterwagen 10 weitergeleitet. Des Weiteren ist zu sehen, dass der Stromabnehmerschlitten 20 einen Magnetsensor 26 umfasst, der die Position entlang des Stromschienensystems 30 erfasst (vgl. Fig. 2B).

Die Führungsrollen 22, 23, die Stromabnehmer 24 sowie der Magnetsensor 26 befinden sich an einem gemeinsamen Träger 21, der mit dem Gestänge 13 des Futterwagens 10 verbunden ist. Über das Gestänge 13 wird einerseits der Stromabnehmerschlitten 20 entlang des Stromschienensystems geschleppt und andererseits der Strom mit Kabeln zum Futterwagen 10 übertragen. Die Kabeldurchführung bzw. das Gestänge 13 befindet sich an einer zentralen Stelle des Stromabnehmerschlittens 20, so dass möglichst keine Drehmomente durch das Schleppen auf den Stromabnehmerschlitten 20 ausgeübt werden. Denkbar ist auch, dass das Gestänge 13 Sensoren für die Position des Stromabnehmerschlittens 20 umfasst. Dadurch kann das Stromschienensystem 30 als Lenksystem für den Futterwagen 10 eingesetzt werden.

In der Figur 2B ist der Stromabnehmerschlitten 20 teilweise innerhalb der Stromschiene 40 in einer perspektivischen Darstellung von schräg oben gezeigt. Zu sehen ist, dass die Stromführungsschiene 40 im Wesentlichen als umgekehrtes U-Profil ausgebildet ist. An der Unterseite befinden sich nach innen gerichtete Fortsätze, zwischen denen ein Schlitz ausgebildet ist, um einen Durchgang vom innenliegenden Stromabnehmerschlitten 20 zum außenliegenden Gestänge 13 zu schaffen.

Des Weiteren sind längs der Stromschiene 40 innen die Stege 42a ,42b und 43 ausgebildet, die als Halterungen bzw. Seiten für die Leiterbahnen 44a, 44b dienen. Dazwischen laufen die Führungsrollen 22 bzw. 23.

Darüber hinaus sind in den Stromschienen 40 innen mehrere Leiterbahn 44a und 44b aus Kupfer ausgebildet, sowie entsprechend hier nicht dargestellte, gegenüberliegende Leiterbahnen, die mit den Stromabnehmern 24a, 24b abgegriffen werden. Rein zur Illustration ist zu sehen, dass der Stromabnehmer 24a durch die Federvorspannung gerade voll ausgefahren ist, da er sich gerade nicht in der Stromschiene 40 befindet und damit auch nicht gegen die damit korrespondierende Leiterbahn 44a gedrückt wird. Dagegen befindet sich der zweite Stromabnehmer 24b gerade innerhalb der Stromschiene 40 und steht gleitend mit der entsprechenden Leiterbahn 44b in Kontakt. Im Betrieb werden also alle vier Stromabnehmer 24 durch jeweils eine Feder gegen die korrespondierenden Leiterbahnen 44 gedrückt. Dadurch können drei Phasen und die Erdung vom Stromschienensystem 30 abgegriffen werden.

Zur Positionserkennung sind an der Stromschiene 40 Magnete 46 angebracht, hier beispielsweise an der Oberseite, die mit dem Magnetsensor 26 erfasst werden können. Über eine entsprechende Zähleinrichtung in der Steuerung des Futterwagens 10 kann dann die Position entlang des Stromschienensystems 30 ermittelt werden.

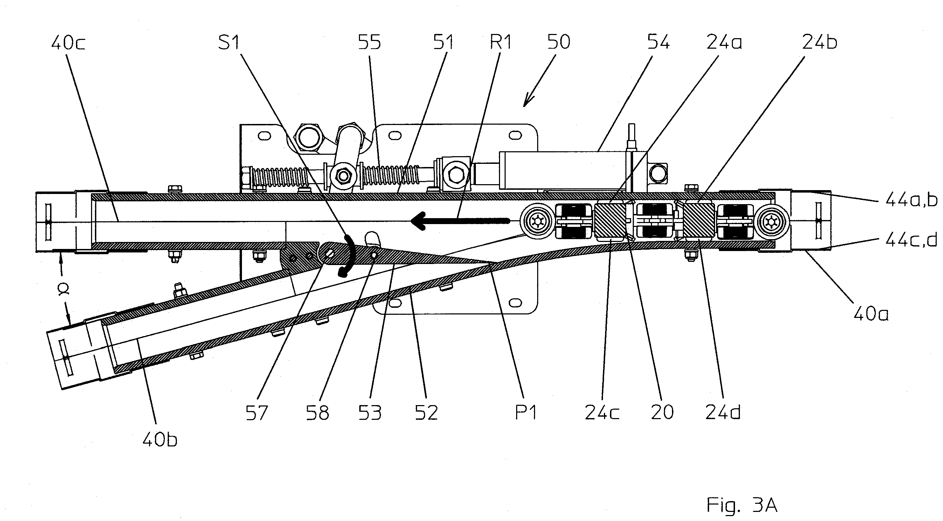

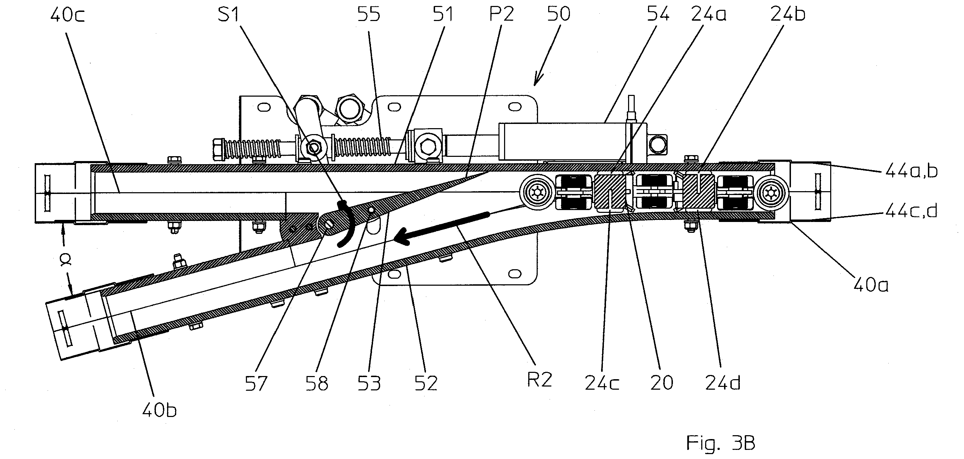

In den Figuren 3A und 3B ist die Weiche 50 des Stromschienensystems 30 mit zwei unterschiedlichen Stellungen des Zungenelements 53 in einer Ansicht von vertikal unten zu sehen, wie sie im Ausführungsbeispiel der Figur 1 zum Einsatz kommt. Zu sehen ist, dass die Weiche 50 die erste Stromschiene 40a mit den zwei weiterführenden Stromschienen 40b und 40c verbindet. Abhängig von der in den Figuren 3A und 3B gezeigten Stellungen des Zungenelements 53 wird der Stromabnehmerschlitten 20 zu einer der beiden weiterführenden Wege R₁ bzw. R₂ geleitet.

Dazu ist die Weiche 50 mit zwei feststehenden und auseinanderführenden Außenführungen 51 und 52 ausgebildet, die hier ähnlich eines Y auseinander führen. Dazwischenliegend ist das verstellbare Zungenelement 53 angeordnet, das um die Achse 57 in Richtung S₁ bzw. S₂ schwenkbar ist, sodass es an einer der beiden Punkte P₁ oder P₂ von innen an der Außenführung 51 oder 52 anliegt.

Beispielsweise liegt das Zungenelement 53 in der Figur 3A an der Außenführung 52 an und bildet dadurch eine Innenführung für die andere, gegenüberliegende Außenführung 51. Folglich wird der Stromabnehmerschlitten 20 zum weiterführenden Weg R₁ und damit zur Stromschiene 40c geleitet.

Wird nun das Zungenelement 53, wie in der Figur 3B dargestellt, mit dem Aktuator 54 in die Richtung S₂ geschwenkt, so liegt es an der Außenführung 51 von innen an und bildet dadurch eine Innenführung für die gegenüberliegende Außenführung 52. Folglich wird der Stromabnehmerschlitten 20 zum anderen weiterführenden Weg R₂ und damit zur Stromschiene 40b geleitet.

Wie in den Figuren 3A und 3B ebenfalls zu sehen, sind die Abstände zwischen den Außenführungen 51 und 52 und dem Zungenelement 53 derart gewählt, dass der Stromabnehmer 24a beim gesamten Durchlaufen der Weiche 50 in Kontakt mit der Außenführung 51 oder dem Zungenelement 53 steht und der andere, gegenüberliegende Stromabnehmer 24c mit der anderen Außenführung 52. Dazu sind die beiden Stromabnehmer 24a und 24c gegenüberliegend am Stromabnehmerschlitten 20 angeordnet und werden über eine Federvorspannung in entgegengesetzte Richtungen nach außen gedrückt. Folglich wird also der Stromabnehmerschlitten 20 durch die Stromabnehmer 24a und 24c bzw. auch durch die nachfolgenden Stromabnehmer 24b und 24d in einer Mittelposition zwischen den Außenführungen 51, 52 bzw. zwischen einer Außenführung 51 oder 52 und dem Zungenelement 53 zentriert gehalten. Dadurch gelingt eine besonders genaue und verschleißarme Führung.

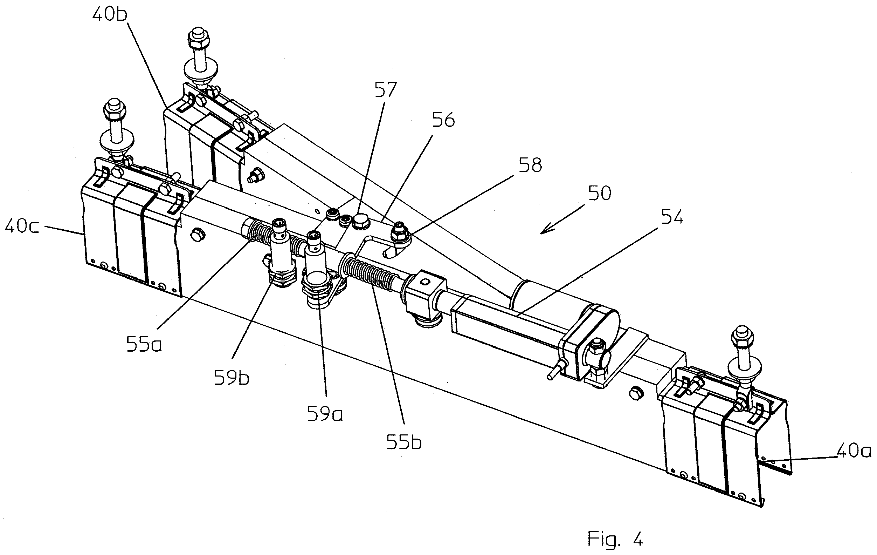

In der Figur 4 ist die Weiche 50 aus den Figuren 3A und 3B aus einer perspektivischen Ansicht von schräg oben dargestellt. In Verbindung mit den Figuren 3A und 3B ist zu sehen, dass der Aktuator 54 über die Federn 55a und 55b mit dem um die Achse 57 drehbar gelagerten Hebel 56 verbunden ist. Durch den Aktuator 54 wird ein Schenkel des Hebels 56 bewegt und so über die Achse 57 und den Anlenkpunkt 58 als Drehbewegung an das Zungenelement 53 übersetzt.

Durch die zwischen dem Aktuator 54 und dem Hebel 56 angeordneten Federn 55a und 55b ist es darüber hinaus möglich, das Zungenelement 53 aus der in der Figur 3A gezeigten Position in die in der Figur 3B gezeigten Position zu drücken bzw. auch umgekehrt, beispielsweise bei einer unbeabsichtigten Rückwärtsfahrt des Stromabnehmerschlittens 20. Dadurch bleibt der Stromabnehmerschlitten 20 auch bei einer Fehlstellung des Zungenelements 53 nicht in der Weiche 50 hängen.

Des Weiteren sind die Positionssensoren 59a und 59b zu sehen, mit der die Position des Zungenelements 53 an den Außenführungen 51, 52 erfasst werden kann. Dadurch ist gewährleistet, dass das Zungenelement 53 entweder an der einen Außenführung 51 oder an der anderen Außenführung 52 anliegt und nicht in einer Zwischenposition stehen bleibt. Andernfalls könnte der Stromabnehmerschlitten 20 bei der Vorwärtsfahrt in der Weiche 50 stecken bleiben.

Ferner ist in den Figuren 3A, 3B und 4 zu sehen, dass die weiterführenden Wege R₁, R₂ bzw. die weiterführenden Stromschienen 40b und 40c einen Winkel α von 15 Grad einschließen. Dadurch ist gewährleistet, dass sich der Stromabnehmerschlitten 20 beim Durchfahren der Weiche 50 in Vorwärtsrichtung nicht verkeilt.

Darüber hinaus ist die Weiche 50 ohne Leiterbahnen ausgebildet, so dass die Führungsrollen 22, 23 und die Stromabnehmer 24 beim Durchlaufen der Weiche 50 möglichst wenig durch Unebenheiten verschleißen. Dazu ist der Futterwagen 10, wie in der Fig. 1 genauer dargestellt, für eine unterbrechungsfreie Stromversorgung mit den beiden Stromabnehmerschlitten 20a, 20b ausgebildet. Durchläuft nun der eine Stromabnehmerschlitten 20b die Weiche 50, so ist durch den anderen Stromabnehmerschlitten 20a gewährleistet, dass der Futterwagen 10 unterbrechungsfrei mit Strom versorgt wird. Dazu weisen die beiden Stromabnehmerschlitten 20a, 20b einen Abstand auf, der größer ist, als die Länge der Weiche 50 entlang ihres Führungswegs.

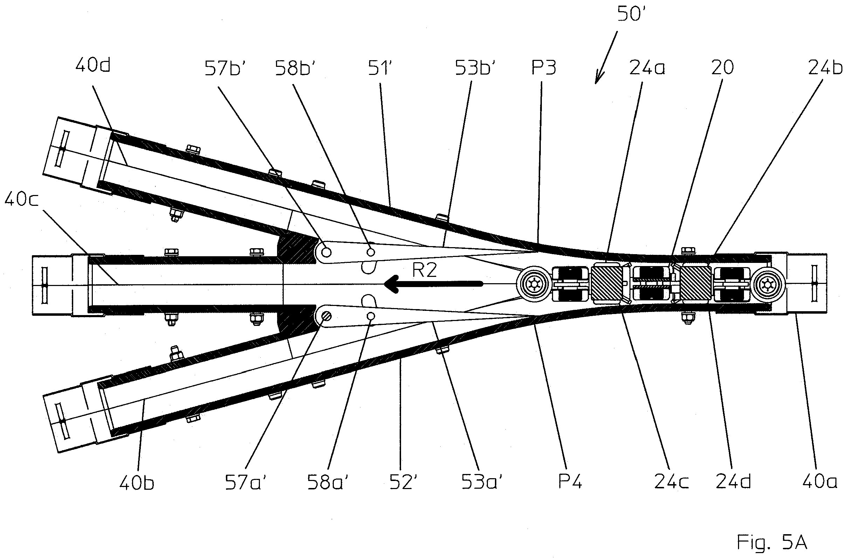

In den Figuren 5A - 5C ist eine weiteres Ausführungsbeispiel einer Weiche 50' des Stromschienensystems 30 nach der Figur 1 mit drei weiterführenden Wegen R₁, R₂ oder R₃ in den unterschiedlichen Stellungen der Zungenelemente 53a', 53b' in einer Ansicht von vertikal unten dargestellt. Die Weiche 50' unterscheidet sich von der Weiche 50 in den Fig. 1, 3A, 3B und 4 im Wesentlichen dadurch, dass drei weiterführende Wege R₁, R₂ und R₃ von der ersten Stromschiene 40a zu den drei Stromschienen 40b, 40c, 40d wählbar sind. Die zuvor in Bezug auf die Ausführungsbeispiele der Fig. 1 - 4 beschriebenen Merkmale gelten für entsprechende Bezugszeichen auch beim Ausführungsbeispiel der Fig. 5A - 5C. Zu sehen ist, dass die Weiche 50' die erste Stromschiene 40a mit den drei weiterführenden Stromschienen 40b, 40c und 40d verbindet. Abhängig von den in den Figuren 5A - 5C gezeigten Stellungen der Zungenelemente 53a' 53b' wird der Stromabnehmerschlitten 20 zu einer der drei weiterführenden Wege R₁, R₂ bzw. R₃ geleitet.

Dazu ist die Weiche 50' mit zwei feststehenden und auseinanderführenden Außenführungen 51' und 52' ausgebildet, die hier ähnlich eines Y auseinander führen. Dazwischenliegend sind die verstellbaren Zungenelemente 53a' und 53b' angeordnet, die um ihre jeweiligen Achsen 57a', 57b' schwenkbar sind. Dazu sind die Zungenelemente 53a', 53b' jeweils an den Anlenkpunkten 58a' bzw. 58b' über einen Hebel und eine Feder mit einem Aktuator verbunden (hier nicht dargestellt). Die konstruktive Ausführung der Verstellmechanismen für die Zungenelemente 53a', 53b' kann jeweils dem in der Fig. 4 dargestellten Ausführungsbeispiel des Verstellmechanismus 54, 55a, 55b, 56, 57, 58 für das eine Zungenelement 53 entsprechen. Folglich sind die Zungenelemente 53a', 53b' getrennt voneinander mit einer Steuerung und den Aktuatoren einstellbar. Darüber hinaus sind auch den Zungenelementen 53a', 53b' Positionssensoren zugeordnet (vgl. Fig. 4), um die tatsächlichen Stellungen der Zungenelemente 53a', 53b' zu erfassen und an eine Steuerung weiterzuleiten. Dadurch können Fehlstellungen erkannt und geeignete Maßnahmen eingeleitet werden.

In der Figur 5A liegt das Zungenelement 53a' an der Außenführung 52' im Punkt P₄ und das Zungenelement 53b' an der Außenführung 51' im Punkt P₃ an und bilden so zueinander gegenüberliegende Innenführungen des mittleren weiterführenden Weges R₂. Folglich wird der Stromabnehmerschlitten 20 zum weiterführenden Weg R₂ und damit zur Stromschiene 40c geleitet.

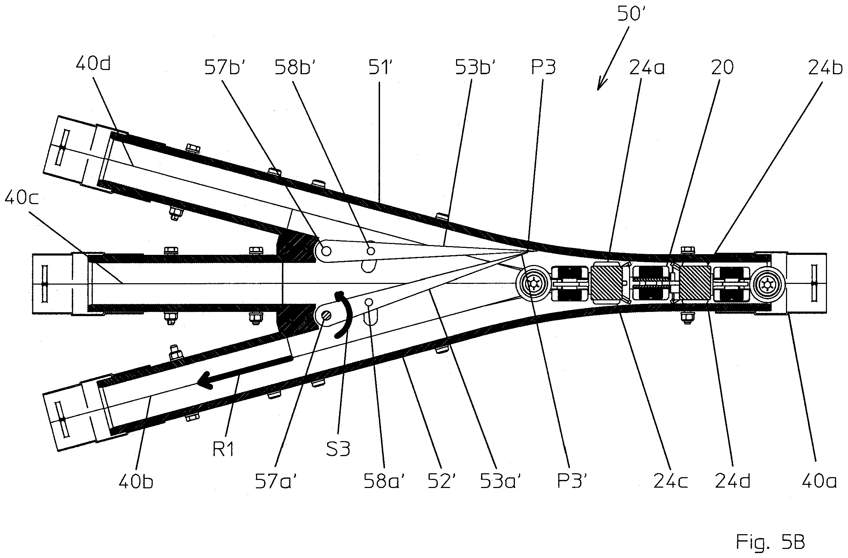

Wird nun das Zungenelement 53a', wie in der Figur 5B dargestellt, mit dem zugehörigen Aktuator in die Richtung S₃ geschwenkt, so liegt es gemeinsam mit dem anderen Zungenelement 53b' von innen an der Außenführung 51' an und bildet dadurch eine Innenführung für die gegenüberliegende Außenführung 52'. "Gemeinsam anliegen" bedeutet hier, dass das Zungenelement 53a' mit seiner Spitze im Punkt P₃' an der Spitze des anderen Zungenelements 53b' anliegt, das seinerseits im Punkt P₃ an der Außenführung 51' anliegt. Folglich wird der Stromabnehmerschlitten 20 zum äußeren weiterführenden Weg R₁ und damit zur Stromschiene 40b geleitet.

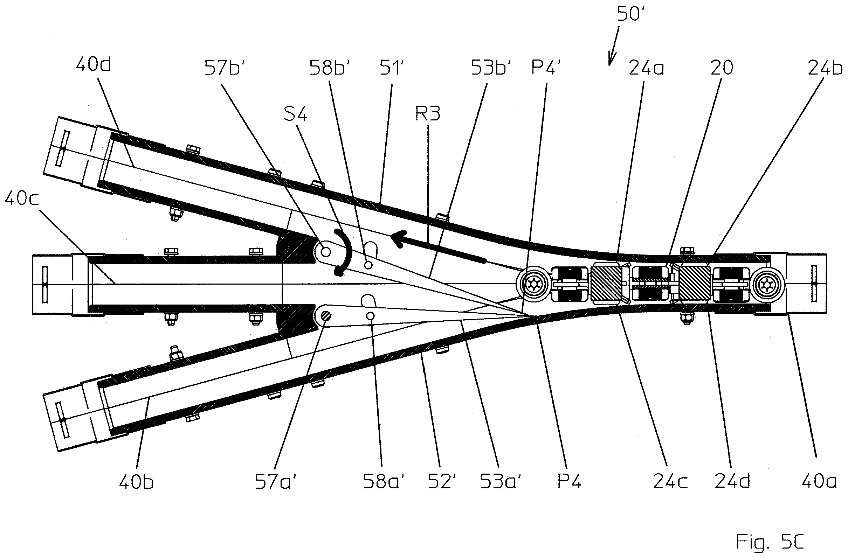

Wird demgegenüber das Zungenelement 53b', wie in der Figur 5C dargestellt, mit dem zugehörigen Aktuator in die Richtung S₄ geschwenkt, so liegt es gemeinsam mit dem anderen Zungenelement 53a' von innen an der Außenführung 52' an und bildet dadurch eine Innenführung für die gegenüberliegende Außenführung 51'. "Gemeinsam anliegen" bedeutet hier ebenfalls, dass das Zungenelement 53b' mit seiner Spitze im Punkt P₄' an der Spitze des anderen Zungenelements 53a' anliegt, das seinerseits im Punkt P₄ an der Außenführung 52' anliegt. Folglich wird der Stromabnehmerschlitten 20 zum anderen äußeren weiterführenden Weg R₃ und damit zur Stromschiene 40d geleitet.

Mit der in den Figuren 5A - 5C dargestellten Weiche 50' ist es also möglich, den Stromabnehmerschlitten 20 wahlweise von der ersten Stromschiene 40a zu einer der drei weiterführenden Stromschienen 40b - 40d zu leiten.

Wie in den Figuren 5A und 5B ebenfalls zu sehen, sind die Abstände zwischen den Außenführungen 51' und 52' und den Zungenelementen 53a', 53b' derart gewählt, dass der Stromabnehmer 24a beim gesamten Durchlaufen der Weiche 50' in Kontakt mit der Außenführung 51' und/oder einem der Zungenelemente 53a', 53b' und der andere, gegenüberliegende Stromabnehmer 24c mit der anderen Außenführung 52' und/oder einem der Zungenelemente 53a', 53b' stehen. Dazu sind die beiden Stromabnehmer 24a und 24c gegenüberliegend am Stromabnehmerschlitten 20 angeordnet und werden über eine Federvorspannung in entgegengesetzte Richtungen nach außen gedrückt. Folglich wird also der Stromabnehmerschlitten 20 durch die Stromabnehmer 24a und 24c bzw. auch durch die nachfolgenden Stromabnehmer 24b und 24d in einer Mittelposition zentriert zwischen den Führungselementen 51', 52', 53a', 53b' gehalten. Dadurch gelingt eine besonders genaue und verschleißarme Führung.

Das System 1 der Figuren 1-5 wird wie folgt eingesetzt:
Zunächst fährt der Futterwagen 10 entlang des Fahrwegs F und wird dabei über das Stromschienensystem 30 und die Stromabnehmerschlitten 20a, 20b mit Strom versorgt. Gelangt der Futterwagen 10 nun zum ersten Abschnitt Fₐ des Fahrwegs, so sendet er abhängig vom vorgegebenen Bewegungsweg per Funk einen Steuerbefehl zur Umschaltung an die Weiche 50, sodass das Zungenelement 53 entweder an der Außenführung 52 oder 51 innen anliegt und die Weiche 50 so in Richtung des weiterführenden Wegs R₁ oder R₂ geschaltet wird. Der Futterwagen 10 fährt dann mit seinem lenkbaren Fahrwerk 12 entlang des gewünschten Abschnitts F_{b} oder F_{c} des Fahrwegs F. Durch die gewählte Stellung des Zungenelements 53 in der Weiche 50 wird der Stromabnehmerschlitten 20 von der ersten Stromschiene 40a korrespondierend mit dem zu fahrenden Abschnitt F_{b} oder F_{c} des Fahrwegs F zu einer der weiterführenden Stromschienen 40b oder 40c geleitet. Entsprechend sendet der Futterwagen beim Ausführungsbeispiel der Fig. 5A-5C einen Steuerbefehl zur Umschaltung an die Weiche 50', so dass die Zungenelemente 53a', 53b' in eine der in den Figuren 5A, 5B oder 5C gezeigten Stellungen geschwenkt sind. Der Futterwagen 10 fährt dann mit seinem lenkbaren Fahrwerk 12 entlang eines von drei gewünschten Abschnitten des Fahrwegs F. Durch die gewählte Stellung der Zungenelemente 53a', 53b' in der Weiche 50' wird der Stromabnehmerschlitten 20 von der ersten Stromschiene 40a korrespondierend mit dem zu fahrenden Abschnitt des Fahrwegs F zu einer der weiterführenden Stromschienen 40b, 40c oder 40d geleitet.

Durch die Weichen 50, 50' ergibt sich eine besonders große Flexibilität des Stromschienensystems 30, so dass es in frei wählbaren Stromschienenabschnitten aufgebaut werden kann. Dadurch, dass in den Weichen 50, 50' lediglich ein bzw. zwei schwenkbare Zungenelement 53, 53a', 53b' angeordnet sind, entstehen besonders wenige Übergänge, wodurch die Führungsrollen 22, 23 bzw. die Stromabnehmer 24 des Stromabnehmerschlittens 20 nur besonders wenig verschlissen werden. Durch die feststehenden Außenführungen 51, 51' und 52, 52' ist eine besonders stabile Verbindung der Stromschienen 40a - 40c bzw. 40d gewährleistet, so dass das Stromschienensystem 30 durch die auftretenden Schleppkräfte keine Abstände oder Stufen in der Führung der Stromabnehmerschlitten 20a, 20b bildet. Dadurch wird eine Beschädigung der Führungsrollen 22, 23 bzw. der Stromabnehmer 24 effektiv verhindert. Des Weiteren wird das Stromschienensystem 30 auch bei einer unbeabsichtigten Rückfahrt nicht beschädigt, da das Zungenelement 53 aufgrund der Federn 55a und 55b durch den Stromabnehmerschlitten 20 in die jeweils andere Position gedrückt werden kann. Darüber hinaus wird auch bei einer Vorwärtsfahrt durch die Positionssensoren 59a und 59b gewährleistet, dass das Zungenelement 53 bzw. die Zungenelemente 53a', 53b' immer an einer der beiden Außenführung 51, 51' oder 52, 52' anliegen. Eine fehlerhafte Zwischenposition des Zungenelements 53 bzw. der Zungenelemente 53a', 53b' wird dadurch erfasst und der Futterwagen 10 kann daraufhin beispielsweise vor dem Passieren der Weiche 50, 50' angehalten werden.

Es versteht sich, dass in den zuvor beschriebenen Ausführungsbeispielen genannte Merkmale nicht auf diese Kombination beschränkt sind, sondern einzeln oder auch in beliebigen anderen Kombinationen möglich sind.

## Patentansprüche

1. System (1) mit einem Futterwagen (10) und mit einem Stromschienensystem (30) zur Stromversorgung des Futterwagens (10) entlang eines Fahrwegs (F),
wobei der Futterwagen (10) wenigstens zwei Stromabnehmerschlitten (20) zum Abgreifen des Stroms vom Stromschienensystem (30) umfasst,
wobei das Stromschienensystem (30) zusätzlich als Lenkschienensystem ausgebildet ist, und wobei ein vorbestimmter Bewegungsweg zum Lenken des Futterwagens (10) wenigstens in Teilabschnitten über den Stromabnehmerschlitten (20) abgreifbar ist, **dadurch gekennzeichnet, dass**
das Stromschienensystem (30) eine Weiche (50) umfasst, um den Stromabnehmerschlitten (20) von einer ersten Stromschiene (40a) wahlweise zu einer von zwei weiterführenden Stromschienen (40b, 40c) zu leiten,
dass die Weiche (50) ohne Leiterbahnen ausgebildet ist und der Futterwagen (10) zur unterbrechungsfreien Stromversorgung die wenigstens zwei Stromabnehmerschlitten (20a, 20b) umfasst,
dass die zwei Stromabnehmerschlitten (20a, 20b) einen Abstand zueinander aufweisen, der größer ist, als die Weiche (50) entlang ihrer Führungswege für die Stromabnehmerschlitten (20a, 20b), und
dass die Weiche (50) zur Führung des Stromabnehmerschlittens (20) zwei feststehende und auseinanderführende Außenführungen (51, 52) mit einem dazwischenliegenden Zungenelement (53) umfasst, das derart verstellbar ist, dass es entweder an der einen oder der anderen Außenführung (51, 52) innen anliegt und dabei die jeweils gegenüberliegende Innenführung des weiterführenden Wegs (R₁, R₂) bildet.

2. System (1) nach Anspruch 1, wobei der Stromabnehmerschlitten (20) mit zwei einander gegenüberliegenden und federvorgespannten Stromabnehmern (24a, 24c) zum Abgreifen des Stroms von entsprechenden Leiterbahnen (44a, 44c) der Stromschienen (40) ausgebildet ist.

3. System (1) nach Anspruch 2, wobei die Abstände zwischen den Außenführungen (51, 52) und dem Zungenelement (53) derart gewählt sind, dass im Betrieb beim gesamten Durchlaufen der Weiche (50) immer einer der beiden Stromabnehmer (24a) in Kontakt mit einer der Außenführungen (52) oder dem daran anliegenden Zungenelement (53) und der andere Stromabnehmer (24c) gleichzeitig in Kontakt mit der anderen Außenführung (51) stehen.

4. System (1) nach einem der vorangegangenen Ansprüche, wobei die Weiche (50) derart ausgebildet ist, dass die weiterführenden Wege (R₁, R₂), insbesondere die weiterführenden Stromschienen (40b, 40c), einen Winkel (α) in einem Bereich von 5 - 25 Grad einschließen.

5. System (1) nach einem der vorangegangenen Ansprüche, wobei die Weiche (50) einen Aktuator (54) zum Verstellen des Zungenelements (53) umfasst.

6. System (1) nach einem der vorangegangenen Ansprüche, wobei das Zungenelement (53) mit einer Feder (55) derart vorgespannt ist, dass es im Betrieb beim Rückwärtsdurchfahren der Weiche (50) durch den Stromabnehmerschlitten (10) von einer der Außenführungen (51) zur anderen Außenführung (52) hindrückbar ist oder umgekehrt.

7. System (1) nach einem der vorangegangenen Ansprüche, wobei wenigstens ein Positionssensor (59a, 59b) dazu ausgebildet ist, die Position des Zungenelements (53) sowohl an der einen Außenführung (51) als auch an der anderen Außenführung (52) zu erfassen.

8. System (1) nach einem der vorangegangenen Ansprüche, wobei entlang der Stromschienen (40) Magnete (46) angeordnet sind und am Stromabnehmerschlitten (20) ein Magnetsensor (26), um die Position des Stromabnehmerschlittens (20) entlang des Stromschienensystems (30) zu erfassen.

9. System (1) nach Anspruch 2 und einem der Ansprüche 3 - 8, wobei das Stromschienensystem (30) Stromschienen (40) mit einem U-förmigen Profil umfasst, die den Stromabnehmerschlitten (20) teilweise umschließen.

10. System (1) nach Anspruch 9, wobei die Stromschienen (40) mit innenliegenden Leiterbahnen (44a - 44d) ausgebildet sind, insbesondere wobei mehrere Leiterbahnen (44a - 44c) zur Stromversorgung und eine Leiterbahn (44d) als Erdung vorgesehen sind.

11. System (1) nach Anspruch 2 oder 3 und 9 oder 10, wobei die Stromschienen (40) zur Zentrierung des Stromabnehmerschlittens (20) durch die federvorgespannten Stromabnehmer (24a, 24c) ausgebildet sind.

12. System (1) nach einem der vorangegangenen Ansprüche, wobei der Stromabnehmerschlitten (20) mehrere Führungsrollen (22, 23) zur Führung in dem Stromschienensystem (30) umfasst.

13. System (1) nach einem der vorangegangenen Ansprüche, wobei der Futterwagen (10) und das Stromschienensystem (30) jeweils mit einer Funkdatenschnittstelle, insbesondere WLAN oder Bluetooth ausgebildet sind, um Steuerbefehle für die Wahl des weiterführenden Wegs (R₁, R₂) auszutauschen.

14. System (1) nach Anspruch 13, wobei der Futterwagen (10) dazu ausgebildet ist, Steuerbefehle an das Stromschienensystem (30) zur Umschaltung der Weiche (50) abzugeben.

15. System (1) mit einem Futterwagen (10) und mit einem Stromschienensystem (30) zur Stromversorgung des Futterwagens (10) entlang eines Fahrwegs (F),
wobei der Futterwagen (10) wenigstens zwei Stromabnehmerschlitten (20) zum Abgreifen des Stroms vom Stromschienensystem (30) umfasst,
wobei das Stromschienensystem (30) zusätzlich als Lenkschienensystem ausgebildet ist, und wobei der vorbestimmte Bewegungsweg zum Lenken des Futterwagens (10) wenigstens in Teilabschnitten über den Stromabnehmerschlitten (20) abgegriffen wird, **dadurch gekennzeichnet, dass**
das Stromschienensystem (30) eine Weiche (50') umfasst, um den Stromabnehmerschlitten (20) von einer ersten Stromschiene (40a) wahlweise zu einer von drei weiterführenden Stromschienen (40b, 40c, 40d) zu leiten,
dass die Weiche (50') ohne Leiterbahnen ausgebildet ist und der Futterwagen (10) zur unterbrechungsfreien Stromversorgung die wenigstens zwei Stromabnehmerschlitten (20a, 20b) umfasst,
dass die zwei Stromabnehmerschlitten (20a, 20b) einen Abstand zueinander aufweisen, der größer ist, als die Weiche (50') entlang ihrer Führungswege für die Stromabnehmerschlitten (20a, 20b), und
dass die Weiche (50') zur Führung des Stromabnehmerschlittens (20) zwei feststehende und auseinanderführende Außenführungen (51', 52') mit zwei dazwischenliegenden Zungenelementen (53a', 53b') umfasst, die derart verstellbar sind, dass entweder die Zungenelemente (53a', 53b') an unterschiedlichen Außenführungen (51', 52') innen anliegen und dabei zueinander gegenüberliegende Innenführungen des mittleren weiterführenden Wegs (R₂) bilden,
oder dass beide Zungenelemente (53a', 53b') gemeinsam entweder an der einen oder der anderen Außenführung (51', 52') innen anliegen und dabei die jeweils gegenüberliegende Innenführung des äußeren weiterführenden Wegs (R₁, R₃) bilden.

16. System (1) nach Anspruch 15, wobei die Abstände zwischen den Außenführungen (51', 52') und den Zungenelementen (53a', 53b') derart gewählt sind, dass im Betrieb beim gesamten Durchlaufen der Weiche (50') immer zwei einander gegenüberliegende und federvorgespannte Stromabnehmer (24a, 24c) gleichzeitig jeweils in Kontakt mit einem oder beiden Zungenelemente (53a', 53b') und/oder einer der Außenführungen (51', 52') stehen.

17. System (1) nach Anspruch 15 oder 16, wobei die Weiche (50') einen oder zwei Aktuatoren zum Verstellen der Zungenelemente (53a', 53b') umfasst.

## Claims

1. System (1) with a feed wagon (10) and with a busbar system (30) for supplying power to the feed wagon (10) along a travel path (F),
the feed wagon (10) comprising at least two current collector slides (20) for tapping the current from the busbar system (30),
the busbar system (30) being additionally designed as a steering rail system, and a predetermined movement path for steering the feed wagon (10) being adapted to be tapped at least in sub-sections via the current collector slide,
**characterized in that**
the busbar system (30) comprises a switch (50) for selectively guiding the current collector slide (20) from a first busbar (40a) to one of two continuing busbars (40b, 40c),
that the switch (50) is designed without conductor paths and the feed wagon (10) comprises the at least two current collector slides for uninterrupted power supply,
that the two current collector slides (20a, 20b) have a distance from each other greater than the switch (50) along its guide paths for the current collector slides (20a, 20b) and
that the switch (50) for guiding the current collector slide (20) comprises two fixed and diverging external guides (51, 52) with an interposed tongue element (53) which can be adjusted in such a way that it bears internally against either one or the other external guide (51, 52) and thereby forms the respectively opposite internal guide of the continuing path (R₁, R₂).

2. System (1) according to claim 1, wherein the current collector slide (20) is designed with two mutually opposite and spring-biased current collectors (24a, 24c) for tapping the current from corresponding conductor paths (44a, 44c) of the busbars (40).

3. System (1) according to claim 2, wherein the distances between the external guides (51, 52) and the tongue element (53) are selected in such a way that during operation during the entire passage through the switch (50) one of the two current collectors (24a) is always in contact with one of the external guides (52) or the tongue element (53) resting thereon and the other current collector (24c) is simultaneously in contact with the other external guide (51).

4. System (1) according to one of the preceding claims, wherein the switch (50) is designed in such a way that the continuing paths (R₁, R₂), in particular the continuing busbars (40b, 40c), enclose an angle (α) in a range of 5-25 degrees.

5. System (1) according to one of the preceding claims, wherein the switch (50) comprises an actuator (54) for adjusting the tongue element (53).

6. System (1) according to one of the preceding claims, wherein the tongue element (53) is biased with a spring (55) in such a way that during operation during reverse travel through the switch (50) by the current collector slide (20) it can be pushed from one of the external guides (51) to the other external guide (52), or vice versa.

7. System (1) according to one of the preceding claims, wherein at least one position sensor (59a, 59b) is designed to detect the position of the tongue element (53) both on the one external guide (51) and on the other external guide (52).

8. System (1) according to one of the preceding claims, wherein magnets (46) are arranged along the busbars (40) and a magnetic sensor (26) is arranged on the current collector slide (20) in order to detect the position of the current collector slide (20) along the busbar system (30).

9. System (1) according to claim 2 and one of claims 3-8, wherein the busbar system (30) comprises busbars (40) with a U-shaped profile partially enclosing the current collector slide (20).

10. System (1) according to claim 9, wherein the busbars (40) are designed with internal conductor paths (44a - 44d), in particular wherein a plurality of conductor paths (44a - 44c) are provided for the power supply and one conductor path (44d) is provided as grounding.

11. System (1) according to claim 2 or 3 and 9 or 10, wherein the busbars (40) are designed for centering the current collector slide (20) by the spring-biased current collectors (24a, 24c).

12. System (1) according to one of the preceding claims, wherein the current collector slide (20) comprises a plurality of guide rollers (22, 23) for guiding in the busbar system (30).

13. System (1) according to one of the preceding claims, wherein the feed wagon (10) and the busbar system (30) each are designed with a radio data interface, in particular WLAN or Bluetooth, in order to exchange control commands for the selection of the continuing path (R₁, R₂).

14. System (1) according to claim 13, wherein the feed wagon (10) is designed to issue control commands to the busbar system (30) for switching over the switch (50).

15. System (1) with a feed wagon (10) and with a busbar system (30) for supplying power to the feed wagon (10) along a travel path (F),
the feed wagon (10) comprising at least two current collector slides (20) for tapping the current from the busbar system (30),
the busbar system (30) being additionally designed as a steering rail system, and the predetermined movement path for steering the feed wagon (10) being tapped at least in sub-sections via the current collector slide (20),
**characterized in that**
the busbar system (30) comprises a switch (50') for selectively guiding the current collector slide (20) from a first busbar (40a) to one of three continuing busbars (40b, 40c, 40d),
that the switch (50') is designed without conductor paths and the feed wagon (10) comprises the at least two current collector slides (20a, 20b) for uninterrupted power supply,
that the two current collector slides (20a, 20b) have a mutual distance greater than the switch (50') along its guide paths for the current collector slides (20a, 20b), and
that the switch (50') for guiding the current collector slide (20) comprises two fixed and diverging external guides (51', 52') with two interposed tongue elements (53a', 53b') which are adjustable in such a way that either the tongue elements (53a', 53b') bear internally against different external guides (51', 52') and thereby form mutually opposite internal guides of the middle continuing path (R₂),
or that the two tongue elements (53a', 53b') together bear internally against either one or the other external guide (51', 52') and thereby form the respectively opposite internal guide of the outer continuing path (R₁, R₃).

16. System (1) according to claim 15, wherein the distances between the external guides (51', 52') and the tongue elements (53a', 53b') are selected in such a way that during operation during the entire passage through the switch (50') two mutually opposite and spring-biased current collectors (24a, 24c) are always simultaneously in contact with one or both tongue elements (53a', 53b') and/or one of the external guides (51', 52').

17. System (1) according to claim 15 or 16, wherein the switch (50') comprises one or two actuators for adjusting the tongue elements (53a', 53b').

## Revendications

1. Système (1) comprenant un wagonnet d'alimentation en nourriture (10) et un système à rail de distribution de courant (30) pour alimenter en courant le wagonnet d'alimentation en nourriture (10) le long d'un parcours de déplacement (F), système
dans lequel le wagonnet d'alimentation en nourriture (10) comprend au moins deux chariots collecteurs de courant (20) pour prélever le courant du système à rail de distribution de courant (30),
dans lequel le système à rail de distribution de courant (30) est réalisé en supplément comme système à rail directeur,
et dans lequel un parcours de déplacement prédéterminé pour diriger le wagonnet d'alimentation en nourriture (10) peut être relevé, au moins sur des tronçons partiels, par l'intermédiaire du chariot collecteur de courant (20),
**caractérisé en ce que**
le système à rail de distribution de courant (30) comprend un aiguillage (50) pour diriger le chariot collecteur de courant (20) d'un premier rail de distribution de courant (40a), sélectivement vers l'un de deux rails de distribution de courant (40b, 40c) poursuivant le parcours,
**en ce que** l'aiguillage (50) est réalisé sans pistes conductrices, et le wagonnet d'alimentation en nourriture (10) comprend, pour l'alimentation ininterrompue en courant, lesdits au moins deux chariots collecteurs de courant (20a, 20b),
**en ce que** les deux chariots collecteurs de courant (20a, 20b) présentent une distance d'espacement réciproque, qui est supérieure à la longueur de l'aiguillage (50) le long de ses parcours de guidage pour les chariots collecteurs de courant (20a, 20b), et
**en ce que** l'aiguillage (50) comprend, pour guider le chariot collecteur de courant (20), deux guides extérieurs (51, 52) en position fixe et s'écartant l'un de l'autre, entre lesquels est prévu un élément d'aiguille (53), qui peut être déplacé de manière à s'appuyer intérieurement contre l'un ou contre l'autre guide extérieur (51, 52), en formant ainsi le guide intérieur opposé des suites de parcours (R₁, R₂) respectivement considérées.

2. Système (1) selon la revendication 1, dans lequel le chariot collecteur de courant (20) est conçu avec deux éléments collecteurs de courant (24a, 24c) mutuellement opposés et précontraints par ressort, pour prélever le courant à partir de pistes conductrices (44a, 44c) correspondantes des rails de distribution de courant (40).

3. Système (1) selon la revendication 2, dans lequel la distance d'espacement entre les guides extérieurs (51, 52) et l'élément d'aiguille (53), sont choisies de manière telle, qu'en fonctionnement, lors du passage complet de l'aiguillage (50), l'un des deux éléments collecteur de courant (24a) soit toujours en contact avec l'un des guides extérieurs (52) ou l'élément d'aiguille (53) qui s'y appuie, et l'autre élément collecteur de courant (24c) soit simultanément en contact avec l'autre guide extérieur (51).

4. Système (1) selon l'une des revendications précédentes, dans lequel l'aiguillage (50) est conçu de façon telle, que les suites de parcours (R₁, R₂), notamment les suites de rail de distribution de courant (40b, 40c), forment entre elles un angle (a) situé dans une plage de 5 - 25 degrés.

5. Système (1) selon l'une des revendications précédentes, dans lequel l'aiguillage (50) comporte un actionneur (54) pour assurer le déplacement de l'élément d'aiguille (53).

6. Système (1) selon l'une des revendications précédentes, dans lequel l'élément d'aiguille (53) est précontraint par un ressort (55) de façon telle, qu'en fonctionnement, lors d'un passage en marche arrière de l'aiguillage (50), il puisse être repoussé par le chariot collecteur de courant (10), de l'un des guides extérieurs (51) vers l'autre guide extérieur (52) ou inversement.

7. Système (1) selon l'une des revendications précédentes, dans lequel au moins un capteur de position (59a, 59b) est conçu pour relever la position de l'élément d'aiguille (53), aussi bien sur un guide extérieur (51) que sur l'autre guide extérieur (52).

8. Système (1) selon l'une des revendications précédentes, dans lequel le long des rails de distribution de courant (40) sont agencés des aimants (46), et sur le chariot collecteur de courant (20), un capteur magnétique (26) pour relever la position du chariot collecteur de courant (20) le long du système à rail de distribution de courant (30).

9. Système (1) selon la revendication 2 et l'une des revendications 3 - 8, dans lequel le système à rail de distribution de courant (30) comprend des rails de distribution de courant (40) avec un profil en forme de U, qui entourent partiellement le chariot collecteur de courant (20).

10. Système (1) selon la revendication 9, dans lequel les rails de distribution de courant (40) sont réalisés avec des pistes conductrices (44a - 44d) situées à l'intérieur, notamment dans lequel plusieurs pistes conductrices (44a - 44c) sont prévues pour l'alimentation en courant, et une piste conductrice (44d) est prévue comme mise à la terre.

11. Système (1) selon la revendication 2 ou la revendication 3, et la revendication 9 ou la revendication 10, dans lequel les rails de distribution de courant (40) sont conçus pour assurer le centrage du chariot collecteur de courant (20) par les éléments collecteurs de courant (24a, 24c) précontraints par ressort.

12. Système (1) selon l'une des revendications précédentes, dans lequel le chariot collecteur de courant (20) comporte plusieurs galets de guidage (22, 23) pour assurer le guidage dans le système à rail de distribution de courant (30).

13. Système (1) selon l'une des revendications précédentes, dans lequel le wagonnet d'alimentation en nourriture (10) et le système à rail de distribution de courant (30) sont conçus avec une interface de données radio, notamment WLAN ou Bluetooth, pour l'échange d'ordres de commande pour la sélection de la suite de parcours (R₁, R₂).

14. Système (1) selon la revendication 13, dans lequel le wagonnet d'alimentation en nourriture (10) est conçu pour délivrer des ordres de commande au système à rail de distribution de courant (30) en vue de la commutation de l'aiguillage (50).

15. Système (1) comprenant un wagonnet d'alimentation en nourriture (10) et un système à rail de distribution de courant (30) pour alimenter en courant le wagonnet d'alimentation en nourriture (10) le long d'un parcours de déplacement (F), système
dans lequel le wagonnet d'alimentation en nourriture (10) comprend au moins deux chariots collecteurs de courant (20) pour prélever le courant du système à rail de distribution de courant (30),
dans lequel le système à rail de distribution de courant (30) est réalisé en supplément comme système à rail directeur,
et dans lequel le parcours de déplacement prédéterminé pour diriger le wagonnet d'alimentation en nourriture (10) est relevé au moins sur des tronçons partiels, par l'intermédiaire du chariot collecteur de courant (20), **caractérisé en ce que**
le système à rail de distribution de courant (30) comprend un aiguillage (50') pour diriger le chariot collecteur de courant (20) d'un premier rail de distribution de courant (40a), sélectivement vers l'un de trois rails de distribution de courant (40b, 40c, 40d) poursuivant le parcours,
**en ce que** l'aiguillage (50') est réalisé sans pistes conductrices, et le wagonnet d'alimentation en nourriture (10) comprend, pour l'alimentation ininterrompue en courant, lesdits au moins deux chariots collecteurs de courant (20a, 20b),
**en ce que** les deux chariots collecteurs de courant (20a, 20b) présentent une distance d'espacement réciproque, qui est supérieure à la longueur de l'aiguillage (50') le long de ses parcours de guidage pour les chariots collecteurs de courant (20a, 20b), et
**en ce que** l'aiguillage (50') comprend, pour guider le chariot collecteur de courant (20), deux guides extérieurs (51', 52') en position fixe et s'écartant l'un de l'autre, entre lesquels sont prévus deux éléments d'aiguille (53a', 53b'), qui peuvent être déplacés de manière telle, que les éléments d'aiguille (53a', 53b') s'appuient intérieurement contre des guides extérieurs (51', 52') différents, en formant à cette occasion des guides intérieurs mutuellement opposés de la suite de parcours centrale (R₂), ou bien que les deux éléments d'aiguille (53a', 53b') s'appuient intérieurement, en commun, contre l'un ou l'autre guide extérieur (51', 52') en formant à cette occasion le guide intérieur respectivement opposé de la suite de parcours extérieure respective (R₁, R₃).

16. Système (1) selon la revendication 15, dans lequel les distances d'espacement entre les guides extérieurs (51', 52') et les éléments d'aiguille (53a', 53b') sont choisies de manière telle, qu'en fonctionnement, lors du passage complet de l'aiguillage (50'), deux éléments collecteurs de courant (24a, 24c) mutuellement opposés et précontraints par ressort soient toujours simultanément en contact avec un ou les deux éléments d'aiguille (53a', 53b') et/ou l'un des guides extérieurs (51', 52').

17. Système (1) selon la revendication 15 ou la revendication 16, dans lequel l'aiguille (50') comprend un ou deux actionneurs pour assurer le déplacement des éléments d'aiguille (53a', 53b').
